# EUROPÄISCHE PATENTSCHRIFT

(11) **EP 2 093 005 B1**
(45) Veröffentlichungstag und Bekanntmachung des Hinweises auf die Patenterteilung: **11.05.2016**
(21) Anmeldenummer: 09000325.2
(22) Anmeldetag: 13.01.2009
(51) Int. Cl.: B23D 47/02, B23D 59/00, B65G 51/03

(54) **Verfahren zum Betreiben eines Luftkissentisches**
Method for operating an air cushion table
Procédé destiné au fonctionnement d'une table à coussin d'air

(30) Priorität: 20.02.2008 DE 102008010089
(43) Veröffentlichungstag der Anmeldung: 26.08.2009
(73) Patentinhaber: HOLZMA Plattenaufteiltechnik GmbH, 75365 Calw-Holzbronn (DE)
(72) Erfinder: Elhaus, Uwe, 75365 Calw (DE)
(74) Vertreter: DREISS Patentanwälte PartG mbB

(56) Entgegenhaltungen:
- WO-A1-01/62680
- DE-A1- 2 141 957
- GB-A- 2 074 118
- US-A- 5 884 543

## Beschreibung

Die vorliegende Erfindung betrifft ein Verfahren zum Betreiben eines Luftkissentisches einer Plattenaufteilanlage nach dem Oberbegriff des Anspruchs 1. Ein solches Verfahren ist der DE 21 41 957 A1 zu entnehmen*.* Außerdem betrifft die Erfindung eine Vorrichtung zum Aufteilen großformatiger plattenförmiger Werkstückes nach Anspruch 9 und eine Steuer- und/oder Regeleinrichtung nach Anspruch 8.

In DE 101 40 250 C1 ist eine Plattenaufteilsäge für großformatige Platten beschrieben, die auf der Bedienseite zwei als Luftkissentische ausgebildete Werkstückauflagetische aufweist. Bei einem solchen Luftkissentisch ist ein ganzflächig gleichmäßig luftdurchlässiger Belag auf einer Auflageplatte vorhanden, auf der der zu bearbeitende Gegenstand aufliegt. Der Belag wird von unten mit Druckluft durchströmt und bildet somit ein Luftpolster. Dies bietet den Vorteil, dass Gegenstände kraftsparend, annähernd reibungsfrei und damit auch beschädigungsfrei verschoben, bzw. transportiert werden können, da sie auf einem Luftkissen schweben.

Die DE 21 41 957 A1 offenbart eine Werkzeugmaschine zur Bearbeitung von Holz- oder Kunststoffplatten. Die US 5,884,543 A betrifft einen Luftkissentisch einer Plattenaufteilsäge, bei dem einzelne Luftaustrittsdüsen stillgelegt werden können. Die WO 01/62680 A1 beschreibt eine Zuführeinrichtung von Glasplatten mit einem Luftkissen, welches von einem Gebläsemotor mit variabler Drehzahl erzeugt wird. Die GB 2 074 118 A zeigt ein Druckluftsystem zum Transport von Gegenständen über einen Luftkissentisch, wobei ein statischer Druck eines Luftkissens durch eine Regelung eines Luftdurchsatzes in einer Luftzuführungseinrichtung gesteuert wird.

Aufgabe der Erfindung ist es, einen Luftkissentisch der eingangs genannten Art so weiterzuentwickeln, dass er kostengünstig betrieben werden kann.

Diese Aufgabe wird mit einem Luftkissentisch mit den Merkmalen des Anspruchs 1 gelöst.

Zum Aufbau eines Luftkissens zwischen dem Luftkissentisch und dem aufliegenden plattenförmigen Werkstück wird durch die Luftzuführungseinrichtung, bspw. durch ein oder mehrere Gebläse, zunächst ein Luftdruck, vorzugsweise in einem Hohlraum unter dem Luftkissentisch aufgebaut. Anschließend entweicht die Luft durch die Öffnungen in dem Luftkissentisch und lässt das Werkstück über dem Luftkissentisch schweben. Vorzugsweise können in den Öffnungen Kugelventildüsen eingelassen sein, die sich erst nach einem Auflegen des Werkstücks öffnen.

Im erfindungsgemäßen Verfahren ist es möglich, dass der aktuelle Betriebsparameter eine Stromaufnahme eines Antriebsmotors der Luftzuführeinrichtung ist. Die Stromaufnahme wird ermittelt bzw. erfasst und kann anschließend beispielsweise über ein entsprechend aufbereitetes Kennfeld und/oder einer Kennlinie ausgewertet werden.

Erfindungsgemäß wurde außerdem erkannt, dass die minimal benötigte Leistung der Luftzuführungseinrichtung von einem Gewicht des Werkstückes abhängt. Da die elektrische Leistungsaufnahme in der dritten Potenz mit der Drehzahl des Gebläses steigt, wird durch die Erfindung in erheblichem Umfang elektrische Energie gespart, denn das Gebläse wird jeweils nur mit der elektrischen Leistung zu betreiben, die gerade nötig ist, um das Werkstück zum Schweben zu bringen. Dies reduziert die Betriebskosten und das Betriebsgeräusch.

Alternativ oder zusätzlich ist es deshalb möglich, dass der aktuelle Betriebsparameter eine auf den Luftkissentisch wirkende Gewichtskraft des Werkstücks ist. Die Gewichtskraft ist kostengünstig mit einem entsprechenden Sensor, beispielsweise einer Kraftmessdose erfassbar bzw. ermittelbar und wird anschließend beispielsweise in einem entsprechend zugeschnittenen Kennfeld und/oder einer Kennlinie ausgewertet. Vorteilhaft hierbei ist, dass es hier keiner Regelung bedarf, da die Gewichtskraft des Werkstückes konstant ist und damit eine Steuerung der Luftzuführeinrichtung ausreicht.

Zur Steuerung der Luftzuführungseinrichtung werden verschiedene Betriebsparameter des Luftkissentisches ausgewertet. Eine hinreichend genaue Regelung und/oder Steuerung bspw. eines Frequenzumrichters zur Regulierung der Luftförderung der Luftzuführeinrichtung kann durch die Auswertung eines einzigen Betriebsparameters erzielt werden; es können jedoch auch mehrere Betriebsparameter, wodurch die Vorrichtung noch präziser arbeitet. Ziel ist in jedem Fall, das Luftkissen gerade so dick zu machen, dass das Werkstück schwebt.

Besonders geeignet, aber nicht erfindungsgemäß, ist hierfür ein Druck stromaufwärts von den Öffnungen, da dieser in direktem Zusammenhang mit dem tatsächlichen Luftkissen steht. Dieser Druck ist mit einem preiswerten Drucksensor messbar und kann anschließend über das Kennfeld und/oder die Kennlinie ausgewertet werden.

Ferner wird vorgeschlagen, dass der aktuelle Betriebsparameter eine Strömungsmenge der von der Luftzuführeinrichtung zugeführten Luft ist. Dazu ist es nötig, die Strömungsmenge vorzugsweise am Ausgang des Gebläses zu ermitteln und anschließend beispielsweise über Kennfelder und/oder Kennlinien auszuwerten. Bei einem größeren Abstand der Luftaustrittsöffnung des Gebläses zu den Öffnungen im Luftkissentisch ist eine gewisse Trägheit beim Lufttransport zu berücksichtigen.

Darüber hinaus wird vorgeschlagen, dass der aktuelle Betriebsparameter eine die Leistungsaufnahme eines Antriebsmotors der Luftzuführeinrichtung charakterisierende Größe ist. Die Förderleistung des Gebläses ist direkt abhängig von der aufgenommenen Leistung des Antriebsmotors. Die Leistung wird gemessen und beispielsweise über ein entsprechend aufbereitetes Kennfeld und/oder einer Kennlinie ausgewertet.

Weiterhin wird vorgeschlagen, dass die Leistung der Luftzuführeinrichtung durch eine geschlossene Regelstrecke abhängig von dem aktuellen Betriebsparameter des Luftkissentisches beeinflusst wird. Durch die Verwendung einer geschlossenen Regelstrecke kann sich die Vorrichtung besonders genau an variierende Verhältnisse anpassen. Dabei wird mindestens ein Betriebsparameter ausgewertet und die elektrischen Größen zum Betreiben der Luftzuführeinrichtung werden entsprechend ausgeregelt. Dazu kann mindestens ein Kennfeld und/oder eine Kennlinie in die Regelstrecke integriert werden, was programmtechnisch einfach zu realisieren ist. Die Funktion des Kennfeldes oder der Kennlinie kann auch eine mathematische Formel bzw. eine Tabelle liefern. Vorzugsweise weist die Vorrichtung einen handelsüblichen Frequenzumrichter auf, über den eine Luftförderung des Gebläses der Luftzuführeinrichtung reguliert wird. Diese Maßnahmen schaffen eine besonders gute Flexibilität beim Betreiben des Luftkissentisches und sind in der Realisierung kostengünstig.

Die Regelstrecke ermittelt in einem iterativen Verfahren dann die optimalen Betriebswerte für die Ansteuerung der Luftzuführungseinrichtung. Um dauernde Drehzahländerungen durch den iterativen Prozess zu verhindern, kann die Regelung über vordefinierte Toleranzfelder und/oder Zeitfilter erfolgen. Dies gilt selbstverständlich auch für andere Betriebsparameter, die für die erfindungsgemäße Ansteuerung der Luftzuführungseinrichtung verwendet werden.

Es wird weiter vorgeschlagen, dass aus dem aktuellen Betriebsparameter und einer Referenzgröße eine Verhältnisgröße gebildet wird, wobei die Referenzgröße einen definierten Referenz-Betriebszustand charakterisiert, und dass die Verhältnisgröße zur Beeinflussung der die Leistung der Luftzuführeinrichtung charakterisierenden Größe verwendet wird. Dies ist softwaretechnisch einfach. In Weiterbildung hierzu wird vorgeschlagen, dass der definierte Referenz-Betriebszustand ein Betriebszustand ist, bei dem auf dem Luftkissentisch kein Werkstück liegt, was vorzugsweise bedeutet, dass der Luftkissentisch im Leerlauf arbeitet.

Kurze Beschreibung der Zeichnungen
- Figur 1: eine schematische Seitenansicht einer Plattenaufteilanlage;
- Figur 2: eine schematische Seitenansicht eines Luftkissentisches der Plattenaufteilanlage von Figur 1;
- Figur 3: ein Diagramm, in dem ein Druck stromaufwärts von Öffnungen des Luftkissentisches von Figur 2 über einem Volumenstrom aufgetragen ist;
- Figur 4: ein Diagramm, in dem eine Stromstärke zum Antreiben eines Gebläses des Luftkissentisches von Figur 2 über dem Volumenstrom aufgetragen ist;
- Figur 5: ein Diagramm, in dem der Druck stromaufwärts von den Öffnungen über einer Gebläsemotorfrequenz bei verschiedenen Volumenströmen aufgetragen ist; und
- Figur 6: ein Diagramm, in dem die Gebläsemotorfrequenz über einem relativen Druckabfall aufgetragen ist.

### Detaillierte Beschreibung

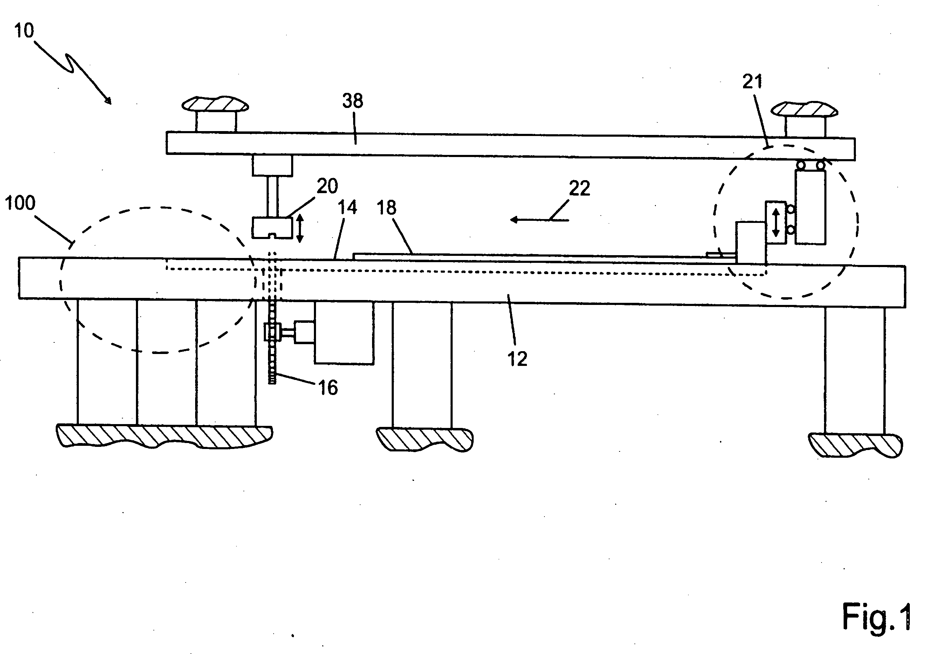

Figur 1 zeigt eine schematische Darstellung einer Plattenaufteilanlage in Form einer Plattenaufteilsäge. Sie ist in ihrer Gesamtheit mit dem Bezugszeichen 10 gekennzeichnet und umfasst einen horizontalen Auflagetisch 12 mit einer ebenfalls horizontalen oberen An- bzw. Auflagefläche 14. Der Auflagetisch 12 weist Transportrollen (nicht sichtbar) auf. Als Bearbeitungsgerät ist bei der Plattenaufteilanlage 10 eine Säge 16 vorgesehen, mit der ein auf dem Auflagetisch 12 liegendes Werkstück 18 in einzelne Streifen aufgeteilt werden kann. Um während des Sägens das Werkstück 18 sicher in Position zu halten, ist oberhalb der Säge 16 ein vertikal verschiebbarer Druckbalken 20 vorgesehen. Um von der Säge 16 in einzelne Streifen aufgeteilt werden zu können, ist das Werkstück 18 durch eine Vorschub- und Spannvorrichtung 21 einspannbar und in Vorschubrichtung 22 bewegbar.

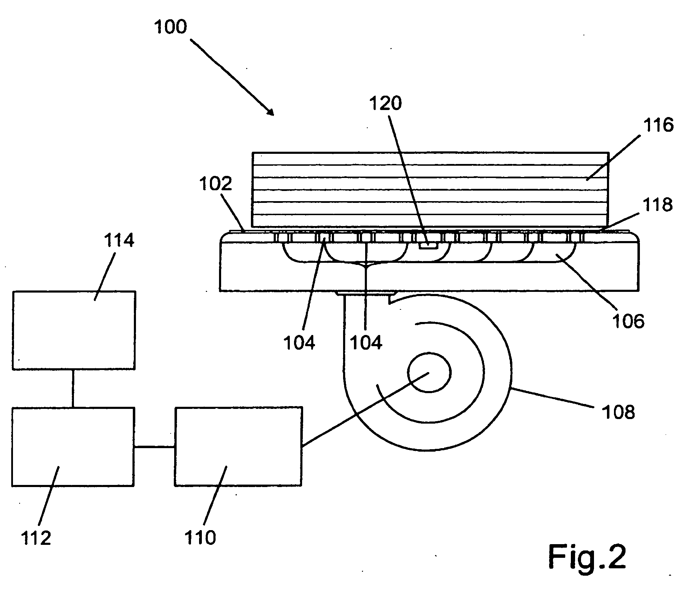

In Figur 1 links von der Säge 16 weist die Plattenaufteilanlage 10 einen Entnahmetisch 100 auf. Figur 2 zeigt eine schematische Darstellung des Entnahmetisches 100, der als Luftkissentisch ausgestaltet ist. Er ist in seiner Gesamtheit mit dem Bezugszeichen 100 gekennzeichnet. Der Luftkissentisch 100 umfasst eine Auflageplatte 102, die mehrere, über die gesamte Auflageplatte verteilte Öffnungen aufweist. Die Öffnungen werden durch Kugelventildüsen 104 gebildet. Der Übersichtlichkeit wegen sind nur zwei Kugelventildüsen mit dem Bezugszeichen 104 gekennzeichnet. Unter der Auflageplatte 102 ist ein Hohlkörper 106 angeordnet, in den ein Gebläse 108 Luft hineinbefördert. Bei einer nicht gezeigten Ausführungsform ist auch eine Anordnung von mehreren Gebläsen möglich.

Das Gebläse 108 wird durch einen elektrischen Motor 110 angetrieben. Dieser wiederum wird von einem Frequenzumrichter 112 gesteuert, der Steuerinformationen von einer Steuer- und Regeleinrichtung 114 bekommt. Auf der Auflageplatte 102 liegt ein Werkstückstapel 116 auf einem Luftpolster 118, welches im Betrieb durch die aus den Kugelventildüsen 104 austretende Luft gebildet wird. Der Hohlkörper 106 weist einen Drucksensor 120 auf, der zwischen zwei Kugelventildüsen 104 angeordnet ist und den im Hohlraum 106 herrschenden Luftdruck erfasst.

Bei dem Luftkissentisch 100 stellt das Gebläse 108 im Betrieb gerade einen solchen (minimalen) Luftdruck und eine solche (minimale) Luftmenge zur Verfügung, dass das Werkstück 116 unabhängig von den Abmessungen oder dem Gewicht über der Auflageplatte 102 gerade noch zum Schweben gebracht wird. Dazu ist in der Steuer- und Regeleinrichtung 114 ein Regelkreis integriert, der mit Hilfe von Messdaten des Drucksensors 120 und in der Steuer- und Regeleinrichtung 114 abgelegten Kennfelder und Kennlinien den Frequenzumrichter 112 ansteuert. Die Ansteuerung erfolgt so, dass sich eine Drehzahl des Gebläses 108 (bzw. ein Druck im Hohlkörper 106) über eine im Folgenden beschriebene Wirkungsweise automatisch den unterschiedlichen Belastungsfällen (Abmessung und Gewicht des Werkstücks 116) anpasst.

Der Belastungsfall an dem Luftkissentisch 100 entsteht in dem Moment des Auflegens des Werkstücks 116 auf die Auflageplatte 102. Die im Leerlauf geschlossenen Kugelventildüsen 104 öffnen sich dabei. Durch die jetzt ausströmende Luft bildet sich ein Luftkissen 118 unter dem Werkstück 116. Je mehr Werkstückfläche auf der Auflageplatte 102 liegt, desto mehr Luft strömt über die Kugelventildüsen 104 ins Freie. Die ausströmende Luft kann als direkter Belastungsindikator für den Luftkissentisch 100 genutzt werden und bewirkt im Hohlkörper 106 einen Druckabfall.

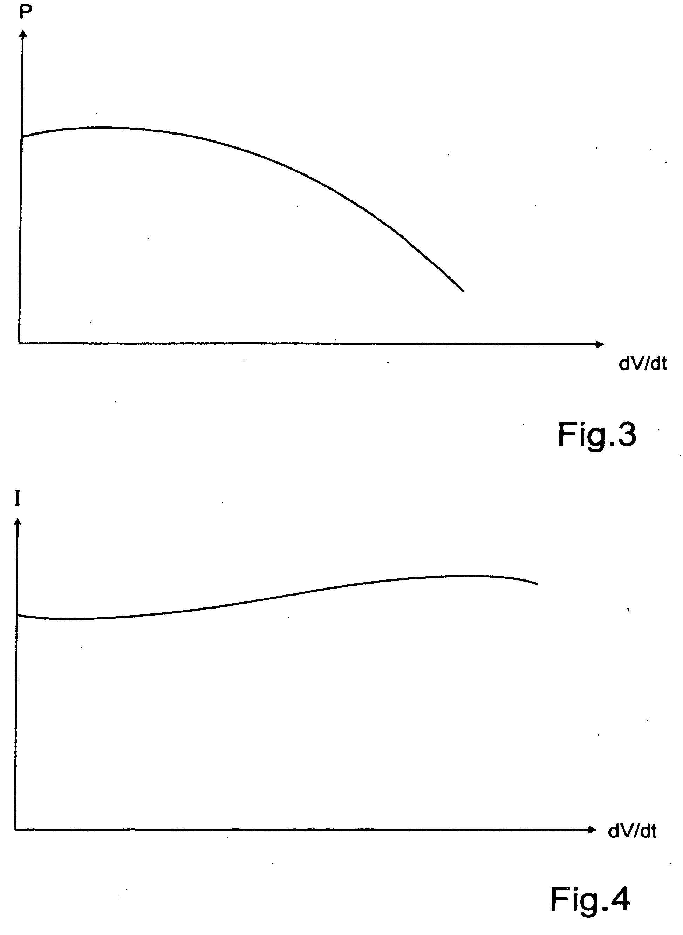

In Figur 3 ist eine Kennlinie in einem Diagramm dargestellt, wobei, für eine bestimmte konstante Drehzahl des Gebläsemotors 110, auf der x-Achse ein Volumenstrom dV/dt der aus den Kugelventildüsen 104 austretenden Luft und auf der y-Achse ein Luftdruck p im Hohlkörper 106 dargestellt ist. Es ist ersichtlich, dass - bei konstanter Drehzahl des Gebläsemotors 110 - mit steigendem Volumenstrom dV/dt von Luft durch die Kugelventildüsen 104 der Luftdruck p im Hohlkörper 106 sinkt. Der Kennlinienverlauf gleicht dabei annähernd einer abfallenden Parabel.

In Figur 4 ist eine Kennlinie in einem Diagramm dargestellt, wobei auf der x-Achse wieder der Volumenstrom dV/dt der aus den Kugelventildüsen 104 austretenden Luft und auf der y-Achse ein Strom I des Motors 110 dargestellt ist, wieder bei konstanter Drehzahl des Gebläsemotors 110. Man erkennt, dass gleichzeitig mit dem Anstieg des Volumenstroms dV/dt der Strom I des vom Motor 110 benötigten Stroms ansteigt, allerdings nur in vergleichsweise geringem Maße und auch nicht über dem gesamten Bereich.

Über die Einbindung des Druckabfalls im Hohlkörper 106, der über den Drucksensor 120 ermittelt wird, in einen Regelkreis ist es möglich, die Tragkraft des Luftkissens 118 über eine Druckänderung, bzw. eine Drehzahländerung des Gebläses 108 linear oder progressiv der Belastungssituation anzupassen. Dazu sind neben dem Regelkreis zusätzlich Kennfelder und Kennlinien in der Steuer- und Regeleinrichtung 114 integriert. Als Stellglied wird dazu der Frequenzumrichter 112 verwendet. Der Frequenzumrichter 112 generiert aus einem Wechselstrom (oder Drehstrom) mit festgelegter Frequenz eine in Amplitude und Frequenz veränderte Spannung, mit der die Drehzahl des Motors 110 gesteuert wird.

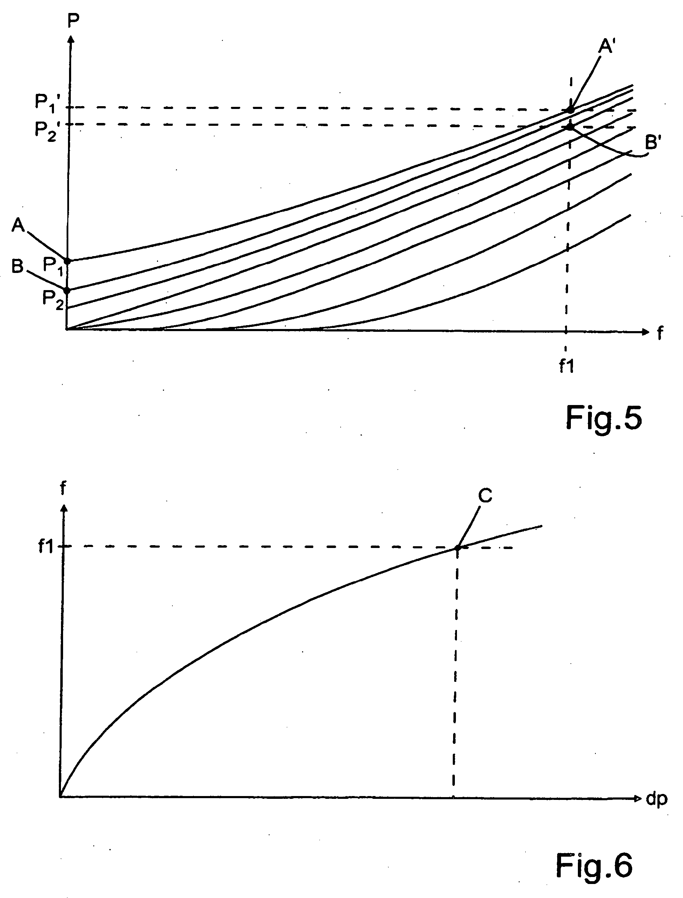

Figur 5 stellt ein Diagramm dar, in dem mittels mehrerer Kennlinien (Volumenstrom dV/dt = konstant) der Zusammenhang zwischen Druck p im Hohlkörper 106 und der vom Frequenzumrichter generierten Frequenz f (entsprechend der Drehzahl des Gebläsemotors 110) hergestellt wird. Das gezeigte Diagramm bildet insoweit eine Art Kennfeld. Die in Figur 5 oberste Kennlinie gilt für einen Volumenstrom dV/dt = 0 (alle Kugelventildüsen 104 sind geschlossen). Die in Figur 5 unterste Kennlinie gilt für einen maximalen Volumenstrom dV/dt.

Figur 6 stellt eine progressive, nicht-lineare Kennlinie dar, in der der Zusammenhang zwischen einem relativen Druckabfallquotienten dp im Hohlkörper 106 aus Figur 5 und einer Soll-Lauffrequenz f des Motors 110 (y-Achse), entsprechend einer Soll-Drehzahl hergestellt wird. Über die Kennlinie von Figur 5 ist es jetzt möglich, zu jedem ermittelten relativen Druckabfall im Hohlkörper 106 eine neue Soll-Lauffrequenz des Motors 110 zu erhalten. In einem iterativen Prozess unter der alternierenden Verwendung des Kennfeldes aus Figur 5 und der Kennlinie aus Figur 6 wird die Frequenz f des Motors 110 unter stetiger Einbeziehung des aktuellen Druckes p und des sich hieraus ergebenden Druckabfallquotienten dp im Hohlkörper 110 so lange verändert, bis sich die dem relativen Druckabfallquotienten dp zugehörige Soll-Frequenz f am Motor 110 eingeregelt hat. Um dauernde Drehzahlveränderungen des Gebläses 108 durch den iterativen Prozess zu verhindern, erfolgt die Regelung vorzugsweise über vordefinierte Toleranzfelder und Zeitfilter.

Ein solcher Regelungsvorgang kann konkret folgendermaßen ablaufen: Zunächst befindet sich noch kein Werkstückstapel 116 auf dem Luftkissentisch 100. Alle Kugelventildüsen 104 sind geschlossen, der Volumenstrom dV/dt ist gleich Null, der Druck p im Hohlkörper 106 ist maximal (p₁). Der Gebläsemotor 110 arbeitet mit minimaler Drehzahl bzw. Frequenz f, entsprechend dem Betriebspunkt A in Figur 5.

Nun gelangt der Werkstückstapel 116 auf den Luftkissentisch 100. Ein Teil der Kugelventilventildüsen 104 öffnet, der Volumenstrom dV/dt steigt an, entsprechend sinkt der Druck p im Hohlkörper 106 von p₁ ab auf p₂ (Betriebspunkt B in Figur 5). Nun wird der Druckabfallquotient dp gebildet mit dp=p₂/p₁. Dieser wird in die Kennlinie von Figur 6 eingespeist, was zu einer neuen Soll-Lauffrequenz f₁ (Betriebspunkt C in Figur 6).

Gemäß Figur 5 ergibt sich nun ein neuer Druck p₂' und ein neuer Druckabfallquotient dp'=p₂'/p₁' aus den neuen Betriebspunkten A' und B'. Auf diese Weise wird schließlich die Soll-Lauffrequenz f auf einen stabilen Endwert eingeschwungen.

Das oben beschriebene Verfahren ist auf einem Speicher der Steuer- und Regeleinrichtung 114 als Computerprogramm abgespeichert.

Abweichend von dem oben beschriebenen bevorzugten Ausführungsbeispiel ist es möglich, neben dem Druckabfall im Hohlkörper 110 andere Messgrößen heranzuziehen, um eine Regelung auszuführen. So bietet sich bspw. an, dass
- ein Luftstrom direkt am Gebläse,
- eine elektrische Leistung bzw. Stromaufnahme des Motors oder
- eine auf die Auflageplatte wirkende Gewichtskraft des Werkstoffes
erfasst und in der Steuer- und Regeleinrichtung ausgewertet und durch einen Regelkreis ausgeregelt wird. Dazu braucht man ähnliche Kennfelder und Kennlinien, die allerdings anstatt des Luftdrucks die neu ausgewählte Messgröße anzeigen müssen.

## Patentansprüche

1. Verfahren zum Betreiben eines Luftkissentisches (100) einer Plattenaufteilanlage (10), der mindestens ein großformatiges plattenförmiges Werkstück (116) reibungsarm tragen kann und bei dem Luft einer Mehrzahl von Öffnungen (104) in dem Luftkissentisch (100) mittels einer Luftzuführeinrichtung (108) zugeführt wird, **dadurch gekennzeichnet, dass** mindestens eine die Soll-Antriebsleistung der Luftzuführeinrichtung (108) charakterisierende Größe beeinflusst wird abhängig von einer ermittelten oder erfassten Strömungsmenge der von der Luftzuführungseinrichtung zugeführten Luft, und/oder einer ermittelten oder erfassten Stromaufnahme eines Antriebsmotors (110) der Luftzuführungseinrichtung (108) und/oder einer ermittelten oder erfassten auf den Luftkissentisches (100) wirkenden Gewichtskraft des Werkstücks (116).

2. Verfahren nach Anspruch 1, **dadurch gekennzeichnet, dass** die Soll-Antriebsleistung der Luftzuführeinrichtung (108) durch eine geschlossene Regelstrecke abhängig von dem aktuellen Betriebsparameter des Luftkissentisches (100) beeinflusst wird.

3. Verfahren nach einem der Ansprüche 1 oder 2, **dadurch gekennzeichnet, dass** der aktuelle Betriebsparameter ein Druck stromaufwärts von den Öffnungen (104) ist.

4. Verfahren nach einem der vorhergehenden Ansprüche, **dadurch gekennzeichnet, dass** aus dem aktuellen Betriebsparameter und einer Referenzgröße eine Verhältnisgröße gebildet wird, wobei die Referenzgröße einen definierten Referenz-Betriebszustand charakterisiert, und dass die Verhältnisgröße zur Beeinflussung der die Soll-Antriebsleistung der Luftzuführeinrichtung (108) charakterisierenden Größe verwendet wird.

5. Verfahren nach Anspruch 4, **dadurch gekennzeichnet, dass** der definierte Referenz-Betriebszustand ein Betriebszustand ist, bei dem auf dem Luftkissentisch (100) kein Werkstück liegt.

6. Verfahren nach einem der vorhergehenden Ansprüche, **dadurch gekennzeichnet, dass** der Zusammenhang zwischen aktuellem Betriebsparameter des Luftkissentisches (100) und der die Soll-Antriebsleistung der Luftzuführeinrichtung (108) charakterisierenden Größe nicht-linear, insbesondere progressiv ist.

7. Verfahren nach einem der vorhergehenden Ansprüche, **dadurch gekennzeichnet, dass** der Zusammenhang zwischen aktuellem Betriebsparameter des Luftkissentisches (100) und der die Soll-Antriebsleistung der Luftzuführeinrichtung (108) charakterisierenden Größe mindestens im Wesentlichen linear ist.

8. Steuer- und/oder Regeleinrichtung (114) für einen Luftkissentisch (100), **dadurch gekennzeichnet, dass** sie zur Anwendung in einem Verfahren nach einem der Ansprüche 1 bis 7 programmiert ist.

9. Vorrichtung zum Aufteilen großformatiger plattenförmiger Werkstücke, mit einem Luftkissentisch (100), einer Luftzuführeinrichtung (108) und einer Steuer- und/oder Regeleinrichtung (114), **dadurch gekennzeichnet, dass** die Steuer- und/oder Regeleinrichtung (114) zur Anwendung in einem Verfahren nach einem der Ansprüche 1 bis 7 programmiert ist.

## Claims

1. A method for operating an air cushion table (100) of a panel cutting system (10), which table is capable of supporting at least one large-scale panel-like workpiece (116) with low friction, and in which table, air air is supplied to a plurality of openings (104) in the air cushion table (100) by means of an air supply device (108), **characterized in that** at least one variable characterizing the desired drive output of the air supply device (108) is varied as a function of an ascertained or detected flow quantity of the air supplied by the air supply device, and/or of an ascertained or detected current consumption of a drive motor (110) of the air supply device (108), and/or of an ascertained or detected weight of the workpiece (116) acting on the air cushion table (100) .

2. The method of claim 1, **characterized in that** the desired drive output of the air supply device (108) is varied by a closed controlled system as a function of the actual operating parameter of the air cushion table (100).

3. The method of one of claims 1 or 2, **characterized in that** the actual operating parameter is a pressure upstream of the openings (104).

4. The method of one of the foregoing claims, **characterized in that** from the actual operating parameter and a reference variable, a relation parameter is formed, and the reference variable characterizes a defined reference operating state; and that the relation parameter is used for varying the variable characterizing the desired drive output of the air supply device (108).

5. The method of claim 4, **characterized in that** the defined reference operating state is an operating state in which no workpiece is resting on the air cushion table (100).

6. The method of one of the foregoing claims, **characterized in that** the relationship between the actual operating parameter of the air cushion table (100) and the variable characterizing the desired drive output of the air supply device (108) is non-linear, and in particular is progressive.

7. The method of one of the foregoing claims, **characterized in that** the relationship between the actual operating parameter of the air cushion table (100) and the variable characterizing the desired drive output of the air supply device (108) is at least essentially linear.

8. A control and/or regulating device (114) for an air cushion table (100), **characterized in that** it is programmed for use in a method of one of claims 1 through 7.

9. An apparatus for distributing large-scale panel-like workpieces, having an air cushion table (100), an air supply device (108), and a control and/or regulating device (114), **characterized in that** the control and/or regulating device (114) is programmed for use in a method of one of claims 1 through 7.

## Revendications

1. Procédé pour faire fonctionner une table à coussin d'air (100) d'une installation à diviser des plaques (10), table qui peut supporter à faible frottement au moins une pièce à usiner (116) en forme de plaque de format important et dans laquelle de l'air est amené, par l'intermédiaire d'un dispositif d'alimentation en air (108), à une pluralité d'orifices (104) dans ladite table à coussin d'air (100), **caractérisé par le fait qu'**au moins une grandeur caractérisant la puissance d'entraînement de consigne dudit dispositif d'alimentation en air (108) est influencée en fonction d'une quantité d'écoulement déterminée ou détectée de l'air amené par ledit dispositif d'alimentation en air, et/ou d'un courant absorbé déterminé ou détecté d'un moteur d'entraînement (110) du dispositif d'alimentation en air (108), et/ou d'un poids déterminé ou détecté de la pièce à usiner (116), qui agit sur ladite table à coussin d'air (100).

2. Procédé selon la revendication 1, **caractérisé par le fait que** la puissance d'entraînement de consigne dudit dispositif d'alimentation en air (108) est influencée par une boucle d'asservissement fermée en fonction du paramètre actuel de fonctionnement de la table à coussin d'air (100).

3. Procédé selon l'une quelconque des revendications 1 ou 2, **caractérisé par le fait que** le paramètre actuel de fonctionnement est une pression en amont des orifices (104).

4. Procédé selon l'une quelconque des revendications précédentes, **caractérisé par le fait qu'**une grandeur proportionnelle est formée à partir du paramètre actuel de fonctionnement et d'une grandeur de référence, ladite grandeur de référence caractérisant un état de fonctionnement de référence défini, et que la grandeur proportionnelle est utilisée pour influer sur la grandeur caractérisant la puissance d'entraînement de consigne du dispositif d'alimentation en air (108).

5. Procédé selon la revendication 4, **caractérisé par le fait que** l'état de fonctionnement de référence défini est un état de fonctionnement dans lequel aucune pièce à usiner ne se trouve sur ladite table à coussin d'air (100).

6. Procédé selon l'une quelconque des revendications précédentes, **caractérisé par le fait que** la relation entre le paramètre actuel de fonctionnement de la table à coussin d'air (100) et la grandeur caractérisant la puissance d'entraînement de consigne du dispositif d'alimentation en air (108) est non linéaire, en particulier progressive.

7. Procédé selon l'une quelconque des revendications précédentes, **caractérisé par le fait que** la relation entre le paramètre actuel de fonctionnement de la table à coussin d'air (100) et la grandeur caractérisant la puissance d'entraînement de consigne du dispositif d'alimentation en air (108) est au moins pour l'essentiel linéaire.

8. Dispositif de commande et/ou d'asservissement (114) pour une table à coussin d'air (100), **caractérisé par le fait qu'**il est programmé pour l'application dans un procédé selon l'une quelconque des revendications 1 à 7.

9. Dispositif à diviser des pièces à usiner en forme de plaque de format important, comprenant une table à coussin d'air (100), un dispositif d'alimentation en air (108) et un dispositif de commande et/ou d'asservissement (114), **caractérisé par le fait que** ledit dispositif de commande et/ou d'asservissement (114) est programmé pour l'application dans un procédé selon l'une quelconque des revendications 1 à 7.
